# EUROPEAN PATENT APPLICATION

(11) **EP 1 710 142 A1**
(43) Date of publication of application: **11.10.2006**
(21) Application number: 05388031.6
(22) Date of filing: 04.04.2005
(51) Int. Cl.: B60S 3/04, C02F 3/06, C02F 9/00

(54) **A water treatment system, a method of establishing water treatment capabilities and a method of regulating use of an amount of recycled water**

(71) Applicant: European Aqua Treatment ApS, 3460 Birkerod (DK)
(72) Inventor: Jakobsen, Jakob Bo, 3460 Birkerod (DK)
(74) Representative: Nielsen, Henrik Sten

(57) **Abstract**

The present invention relates to a method of establishing water treatment capabilities in an existing vehicle washing facility. The vehicle washing facility comprises a vehicle washing hall (12) comprising vehicle washing machinery (16) for automatic or semiautomatic vehicle washing, the vehicle washing machinery (16) including a plurality of water dispensing nozzles, a first reservoir (20) for storing water, the first reservoir (20) having an outlet in fluid communication with the plurality of water dispensing nozzles for delivering water, the first reservoir (20) having an inlet for receiving water from a waterworks (40), a water collection unit (23) collecting waste water from the vehicle washing facility, the water collection unit (23) having an outlet, a grit chamber (24) having an inlet in fluid communication with the oulet of the water collection unit (23), the grit chamber (24) having an outlet, and a second reservoir (28) having an inlet in fluid communication with the oulet of the grit chamber (24), the second reservoir (28) having an outlet in fluid communication with a sewerage system (38), the second reservoir (28) defining first height, first width and first length. The method according to the present invention comprises the steps of providing a unit (30) having a structure enabling or enhancing growth of bacteria consuming nutrients from the waste water, the unit (30) defines second height, second width and second length being smaller than the first height, the first width and the first length respectively, positioning the unit (30) in the second reservoir (28), and establishing fluid communication between the second reservoir (28) and the first reservoir (20) for delivering at least partly purified water.

## Description

The present invention relates to a method of establishing water treatment capabilities in an existing vehicle washing facility, a unit for establishing water treatment capabilities in an existing vehicle washing facility, a water treatment system for treating waste water from a vehicle washing facility and a method of regulating use of an amount of recycled water in a vehicle washing facility.

A great number of vehicle washing facilities exist along the roads of Europe, North America, South America, Asia and any places where vehicles may be driven. The washing of vehicles, for the most part, includes using soap or other cleaning compounds for cleaning dirt of vehicles. The dirt and/or soap used may constitute nutrients for bacteria and release of such nutrients into the surrounding environment may cause unwanted growth of bacteria, algae or other unwanted organisms in the surrounding environment. Therefore, a reduction of release of these possible nutrients is required for vehicle washing facilities and the present invention provides a method for establishing such water treatment capabilities for reducing the amount of nutrients in water released to the surrounding environments, e.g. to a sewage system, cesspool or other discharge locations.

The vehicle washing facilities may wash the vehicles by using brushes or high-pressure water. In the high-pressure water facility the water is delivered through nozzles and the vehicles are washed without the use or brushes. In the alternative, the vehicle washing facility may comprise both washing by brushes and by high-pressure water.

Vehicle washing soap and compositions are known in literature, e.g. US 5,759,980, US 2,847,004 and others. Reference is made to the two mentioned US patent publications, both of which are hereby incorporated by reference in the present specification by reference.

Other technical patent publications in related fields are publications such as US 5,885,459, US 4,16,232, US 5,993,659, US 2003/0213502, US 4,857,113, reference is made to the mentioned US patent publications, all of which is hereby incorporated by reference in the present specification by reference.

The present invention further provides a unit for placement in an existing vehicle washing facility, thereby enabling the establishment of water treatment capabilities.

Even further, the present invention provides a system for treating wastewater using a unit as described above. The water treatment system may be established using the method according to the present invention or in the alternative be established during the construction of a vehicle washing facility.

Again further, the present invention provides a method of regulating the amount of water recycled back into a system by determining the contents of dissolved salt in the water, as the contents of salt in the water, especially in parts of the world having periods of time with snow and the use of salt for lowering the freezing point of the snow or ice present on the roadway is used. The salt dissolved in the water may cause corrosion in the cars or vehicles and the water used to wash the vehicles may not contain a high amount of salt.

In a first aspect, the present invention relates to a method of establishing water treatment capabilities in an existing vehicle washing facility, the vehicle washing facility comprising:
a vehicle washing hall comprising vehicle washing machinery for automatic or semiautomatic vehicle washing, the vehicle washing machinery including a plurality of water dispensing nozzles,
a first reservoir for storing water, the first reservoir having an outlet in fluid communication with the plurality of water dispensing nozzles for delivering water, the first reservoir having an inlet for receiving water from a waterworks,
a water collection unit collecting waste water from the vehicle washing facility, the water collection unit having an outlet,
a grit chamber having an inlet in fluid communication with the outlet of the water collection unit, the grit chamber having an outlet, and
a second reservoir having an inlet in fluid communication with the outlet of the grit chamber, the second reservoir having an outlet in fluid communication with a sewerage system, the second reservoir defining first height, first width and first length,
the method comprising the steps of:
   providing a unit having a structure enabling or enhancing growth of bacteria consuming nutrients from the waste water, the unit defines second height, second width and second length being smaller than the first height, the first width and the first length respectively,
   positioning the unit in the second reservoir, and
   establishing fluid communication between the second reservoir and the first reservoir for delivering at least partly purified water.

The first reservoir is preferably used during the washing and rinsing of the vehicles. In a particularly preferable embodiment of the present invention, the first reservoir is constituted by a reservoir having two chambers, each defining a specific volume and one of the volumes being greater than the other. Alternatively, the first reservoir may be constituted by two separate reservoirs, again each defining a specific volume and one volume being greater than the other. The first reservoir, in the existing vehicle washing facility, receives water from a public water works, i.e. water suitable for drinking. The use of a reservoir is needed as the water flow speed of the water delivered from a water works may not be sufficient compared to the water flow requirements of the vehicle washing facility.

The water collection unit collects water from the vehicle washing facility and may be constituted by a funnel or other collecting devices.

The grit chamber ensures that oil and dirt and other particles and the like are not sent on in the water treatment system, which would have caused the system to get obstructed, choked or in other ways hindered the water from the further processing.

The second reservoir receives from the grit chamber and in the existing systems, the second reservoir releases the water from the second reservoir and into sewage systems or the like. The inside of the second reservoir defines inner dimensions, i.e. the first height, first width and first length defining the inner volume of the second reservoir.

The unit has a structure on which colonies of bacteria are allowed to grow, which bacteria then consumes the nutrients found in the water received from the grit chamber. The bacteria may decompose or consume the nutrients using aerobic or anaerobic consumption depending on the environment present in the second reservoir and the amount of bacteria found on the unit. The unit defines dimensions smaller than those defined by the second reservoir so that the unit may be placed inside the inner volume defined by the second reservoir. Also, the unit must be able to be placed in the second reservoir through e.g. a hole covered by a well cover. Alternatively, the unit may be divided into sections, which may then be brought through the hole.

For reusing the water, now at least partly purified by the bacteria, a fluid communication between the second reservoir and the first reservoir must be established if such a communication is not already present.

In alternative embodiments of the present invention, a number of pipes establishing the fluid communications between the individual parts mentioned above in relation to the first aspect of the present invention must be provided and preferably be dug into the ground.

The method according to the first aspect may include any of the features mentioned in relation to the second, third and/or fourth aspect of the present invention or any of the appended claims.

Further, the second reservoir may define at least one outlet being in fluid communication with the first reservoir for delivering at least partly purified water thereto. Additionally the second reservoir may further define least one outlet being in fluid communication with a public sewerage system for delivering water thereto.

Advantageously, the first reservoir may be defined by two separate reservoirs each defining a specific volume or, in the alternative, comprises two chambers each defining a specific volume.

A second aspect of the present invention relates to a unit having a structure enabling or enhancing growth of bacteria for consuming nutrients from the waste water for establishing water treatment capabilities in an existing vehicle washing facility according to the method of claim 1, the unit defining a corrugated surface.

The unit according to the second aspect may include any of the features mentioned in relation to the first, third and/or fourth aspect of the present invention or any of the appended claims.

In a third aspect, the present invention relates to a treatment system for treating waste water from a vehicle washing facility comprising:
a first reservoir for storing and dispensing water, the first reservoir having an inlet for receiving water and an outlet for dispensing water, the outlet of the first reservoir being in fluid communication with the vehicle washing facility, the inlet of the first reservoir in fluid communication with a water works or water company for receiving water therefrom,
a grit chamber having an inlet in fluid communication with the vehicle washing facility for receiving waste water therefrom, the grit chamber having an outlet,
a bio-reactor having an inlet in fluid communication with the outlet of the grit chamber for receiving water therefrom, the bio-reactor including a frame structure supporting a unit whereon bacteria grows for consuming nutrients of the waste water, the bio-reactor having an outlet in fluid communication with a public sewerage system for delivering unused water thereto.

The water treatment system according to the third aspect of the present invention comprises most of the parts mentioned and discussed in relation to the first aspect and second aspect of the present invention, either being established by the method according to the first aspect of the present invention or established in construction of the vehicle washing facility comprising the water treatment system according to the third aspect.

In one embodiment, the bio-reactor may further include an outlet in fluid communication with the inlet of the first reservoir.

Advantageously, the water treatment system may further comprise a second intermediate reservoir receiving water from the bio-reactor, the second intermediate reservoir may include a second pump for pumping water into the first reservoir.

More advantageously, the water treatment system may further comprise:
a intermediate reservoir defining an inlet in fluid communication with the grit chamber and a first outlet in fluid communication with the inlet of the bio-reactor and a second outlet in fluid communication with an undercarriage washing unit in the vehicle washing facility, a pump located downstream from the intermediate reservoir and upstream of the undercarriage washing unit, the pump pumping water from the first intermediate reservoir to the undercarriage washing unit.

Even more advantageously, the water treatment system may further comprise a rain water reservoir receiving water from a rain collecting unit,
the rain water reservoir having an outlet in fluid communication with the first reservoir for delivering water to the first reservoir.

The water treatment system according to the third aspect may include any of the features mentioned in relation to the first, second and/or fourth aspect of the present invention or any of the appended claims.

A fourth aspect of the present invention relates to a method of regulating use of an amount of recycled water in a vehicle washing facility, the facility comprising:
an automatic or semi-automatic vehicle washing apparatus having a first outlet and a first inlet,
a first reservoir comprising a water treatment unit, the first reservoir having a second inlet in fluid communication with the first outlet of the automatic or semi-automatic vehicle washing apparatus, the first reservoir having a third outlet in fluid communication with a public sewerage system,
a second reservoir for collecting and storing water having a third inlet in fluid communication with the second outlet of the first reservoir, the second reservoir further having a fourth inlet in fluid communication with a water works, the second reservoir having a fourth outlet in fluid communication with the first inlet of the vehicle washing apparatus,
a pump having a pump inlet and a pump outlet, the pump inlet in fluid communication with the second outlet of the first reservoir, the pump outlet in fluid communication with the fourth inlet of the second reservoir,
a first measuring unit for measuring or determining the conductivity of water present in or delivered from the first reservoir enabling calculation of amount of NaCI in the water,
the method comprising the steps of:
   i) measuring or determining the conductivity of the water in the collecting reservoir using the first measuring unit,
   ii) provided the conductivity of the water in the first reservoir is below a first conductivity level operating the pump for pumping water from the collecting and storing reservoir into the vehicle washing apparatus.

As previously discussed, the content of sodium chloride, i.e. salt, dispersed on roadways for reducing the melting point or freezing point of snow and ice present on the roadway constitutes an obstacle for reusing water previously used in vehicle washing facilities, especially in the Northern parts of Europe and North America and possibly any other place where salt is used against ice present on roadways.

The measuring of the conductivity of the water present in a reservoir has a direct correspondence to the amount of salt dissolved in the water, as the Na+ and Cl- ions affect the conductivity of the water. The calculation or determination of the amount of salt in the water from the measurement of the conductivity of the water may not be required, as a previous value may have been calculated so that the decision on whether or not to reuse water from the reservoir may be based solely on the measurement of the conductivity. Alternatively, a calculation unit, i.e. a computer, may be provided for performing the calculation of converting the measured conductivity into a salt concentration value representing the amount of salt present in the water.

The first measuring unit may be positioned within the first reservoir, i.e. submerged in the water, alternatively in a pipe where through water is led from the first reservoir to the vehicle washing apparatus, further alternatively at a pump pumping water from the reservoir to the washing apparatus.

In the method according to the fourth aspect the vehicle washing facility may further comprise a rainwater collection unit for collecting and storing rainwater, the rainwater collection unit being in fluid communication with the first inlet of the vehicle washing apparatus,
a second measuring unit for measuring or determining the conductivity of water present in or delivered from the rainwater collection unit enabling calculation of amount of NaCl in the water,
the method further comprising the steps of:
   i) measuring or determining the conductivity of the water in the rainwater collection unit using the second measuring unit,
   ii) provided the conductivity of the water in the rainwater collection unit is below a third conductivity level operating the pump for pumping water from the rainwater collection unit into the vehicle washing apparatus.

The second measuring unit may be positioned within the tank, i.e. submerged in the rainwater collected or in a pipe leading rainwater from the tank e.g. via a pump to the vehicle washing apparatus.

In a preferred embodiment of the present invention, the first and the second measuring units may be constituted by one measuring unit.

Additionally, the method according to the fourth aspect may include any of the features mentioned in relation to the first, second and/or third aspect of the present invention or any of the appended claims.

In addition to the above mentioned tanks and/or reservoirs, the facilities according to the first, second, third and fourth aspects may include tanks or units such as oil separation units, sludge or sediment tanks or additional grit chambers. Further, the water may undergo further treatment in a root zone facility. Even further, water may be discharged from the vehicle washing facility at any point for reducing the total amount of water in the system. Still further, the measuring unit may be a measuring unit measuring contents of other elements, such as minerals, e.g. lead, cadmium, copper or zinc. Even still further, the facilities may comprise water gauges or water clocks for monitoring the amount of water used from the different sources of water.

Advantageously, a monitoring system may be set up monitoring the operation of the pump or pumps which monitoring system may then give an alarm message to an operator, e.g. using sound, light, electronic communication or the like. The monitoring system may be integrated with a control system controlling the operation of the pump or pumps.

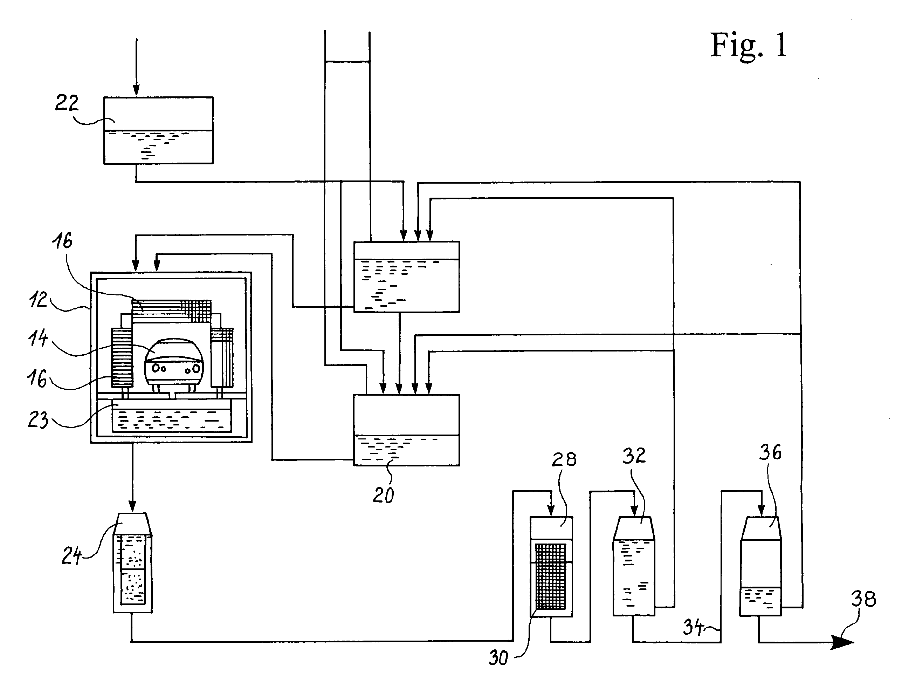

The present invention will now be discussed in greater details with reference to Fig. 1, which is a schematic view of a vehicle washing facility and a water treatment system.

Fig. 1 is a schematic illustration of a vehicle washing facility generally designated the reference numeral 10. The vehicle washing facility 10 comprises a vehicle washing hall 12, wherein vehicles such as cars 14, alternatively other vehicles such as trucks, agricultural machinery, motor cycles or the like.

The vehicles 14 are mechanically washed by rotating brushes 16. Also, the vehicles 14 are washed using water and soap or other detergents or having other additives in the water. In alternative embodiments of the present invention, the vehicles 14 may be washed by water delivered at high pressure.

In the embodiment illustrated in Fig. 1, water is supplied to the vehicle washing hall 12 from two tanks designated 18 and 20, in the embodiment shown in Fig. 1, the tank 18 is larger than the tank 20. Water from the large tank 18 is used in the final wash cycle, and water from the small tank is used for other cycles in the washing of the vehicle 14.

The water in the tanks 18 and 20 are in traditional vehicle washing facilities received from a water works through pipes 40.

Vehicles driving on roads, especially in the Northern part of Europe, such as Scandinavia and also other parts of the world, are subject to water, i.e. melting water from snow and ice, mixed with salt that authorities distribute or dispose on roads for lowering the freezing point of water so that the ice and snow on the roads do not cause the vehicles to slip and thereby reduces the risk of accidents. The salt, however, constitutes a problem for both the vehicles, as they may be subject to increased corrosion risk and to the vehicle washing facilities as the amount of salt in the water, when such water is to be recycled and reused for washing vehicles, the water should not contain or comprise large amounts of salt, which thereby increases the risk of corrosion of the vehicle and may also reduce the effect of detergents and/or soap used to wash the vehicles.

The water supplied to the vehicle washing facility 10 may be supplemented by a collection of rainwater, e.g. using a rainwater collector mounted on the roof of the vehicle washing facility 10. Preparation of the water, e.g. removal of objects collected by the rain water collector must be provided too. The rainwater collector may advantageously be connected to a rainwater tank 22 storing the water collected by the rain water collector.

After or during the vehicle is washed in the vehicle washing hall 12, the water used to clean the vehicle is led or flows into a grit chamber, also called a sand trap or sand table, which is designated the reference numeral 24 in Fig. 1. The water flows through a vat or pool 23 collecting the water from a larger area under the vehicle.

From the grit chamber 24, the water flows through pipes to a well 26, wherein the water is stored temporarily. The well 26 includes a pump not illustrated in Fig. 1 for pumping the water from the well into a chamber 28. The chamber 28 as illustrated in Fig. 1 further includes a bio reactor 30, which is specifically designed for enhancing the growth of bacteria, such that the bacteria may consume or degrade nutrients and other waste found in the water received from the vehicle washing hall 12. The present invention also provides for a method of converting and existing vehicle washing facility into a facility having waste water treatment enabling or enhancing the use or reuse of water previously used to wash vehicles. Also, the at least partly purified water exiting the chamber 28 may be directly led into a public sewage system without adding nutrients and other waste material to the surrounding environment. The bio reactor 30 may be used in a well or chamber previously used for a device separating oil from the water received from the vehicle washing hall 12 or in other well already present at the site of the vehicle washing facility 10.

From the chamber 28, the now at least partly purified water is led or pumped into a buffer tank 32, wherein the water is stored until it is needed by the vehicle washing machinery. The buffer tank 32 includes a pump not illustrated for pumping water from the buffer tank 32 and into the tanks 18 and 20. In alternative embodiments, the buffer tank 32 delivers water to only one of the tanks 18 or 20. Additionally, the buffer tank 32 includes an overflow pipe 34 for ensuring that the buffer tank 32 does not get too filled in periods where the washing facility 10 is not used. The overflow pipe 34 is in fluid communication with a tank 36. The tank 36 includes a pump not illustrated for pumping the water from the tank 36 and into the tanks 18 and 20. Furthermore, the tank 36 includes an outlet in fluid communication with a public sewage system 38.

For controlling the use of recycled water, e.g. partly purified water, from the vehicle washing facility and back into the vehicle washing facility, some or all of the tanks includes one or two sensors for indicating the amount of water in a specific tank. The sensors may detect a specific level of water, e.g. a threshold, or may continuously detect the water level in a specific tank.

The sensors are in electrical communication with a central monitoring device, such as a computer or the like controlling and monitoring the level of water in the individual tanks. The central monitoring device may also advantageously control the operation of the pumps in the individual tanks or reservoirs including such pumps.

Additionally, the tank 32 and/or tank 36 include a sensor for determining the amount of salt in the water comprised within the tanks. The salt sensors may be of a type using electrical signals to determine the conductivity of the water within the tanks as the conductivity of water with a high salt content is different from that of water having a low salt content or concentration.

In a preferred embodiment of the present invention, the water level sensors are used in combination with the sensor for determining the amount of salt in the water.

In one embodiment of the present invention, a vehicle washing facility comprises a first and a second water tank receiving water from a water works and recycled water from a water treatment unit or system. The second tank includes an overflow pipe connected to the first tank. The first tank includes an overflow pipe connected to the water treatment system. The water treatment unit or system comprises a grit chamber, a first well for collecting water from the grit chamber, a second well including a water cleaning unit, i.e. a unit as described earlier, a third well for collecting water from the second well and a buffer tank.

The tanks and well are interconnected by pipes establishing fluid connection or communication between the wells and tanks.

The first well includes a pump for pumping water to an undercarriage washing unit in the vehicle washing facility. The third well includes a pump for pumping water to the tanks from where the water is pumped into the vehicle washing facility during the washing and/or rinsing of vehicles.

The third well further includes a sensor for determining the amount of salt in the water present in the third well.

The buffer tank includes a pump for pumping water into the tanks from where the water is pumped into the vehicle washing facility during the washing and/or rinsing of vehicles.

The two tanks from where the water is pumped into the vehicle washing facility during the washing and/or rinsing of vehicles each include two sensors detecting the water level therein at two different levels.

A central monitoring unit continuously monitors the water levels and the salt contents. On the basis of the water levels and the salt content the central monitoring unit controls a number of valves regulating the use of return water from the third well and/or the buffer tank. The central monitoring unit may be constituted by a PLC, a computer or any other device capable of electrically communicating with the individual components that is controlled and/or monitored by the central monitoring unit, i.e. the sensors and valves.

The facility may comprise a rainwater tank for storing collected rainwater for further reducing the amount of water works water used during the washing and/or rinsing of vehicles.

Some or all of the pipes constituting the fluid communication between the tanks and wells may include non-return valves or check valves where appropriate. Also water clocks for monitoring the amount of water used may be installed.

The first and second water tank each include two water level sensors. The first of the two water level sensors in each of the tanks represents a higher amount of water present in the tanks than the water level represented by the second sensor.

In an exemplary embodiment an algorithm for controlling the reuse or amount of return water may be as follows:
Provided the first sensor of the first tank indicates no water present at that level and the salt sensor indicates that the salt level is below a first threshold, pumping water from the third well into the first tank.

Provided the first sensor of the first tank indicates no water present at that level and the salt sensor indicates that the salt level is above the first threshold, pumping water from the buffer tank into the first tank and pumping water from the rainwater tank into the second tank.

Provided the second sensor of the first tank indicates no water present at that level, opening for the flow of water from the water works.

Provided the first sensor of the second tank indicates no water present at that level and the salt sensor indicates that the salt level is below a second threshold, pumping water from the third well into the second tank.

Provided the first sensor of the first tank indicates no water present at that level and the salt sensor indicates that the salt level is above the second threshold, pumping water from the rainwater tank into the second tank.

Provided the second sensor of the second tank indicates no water present at that level, opening for the flow of water from the water works.

The first tank defining a smaller volume than that defined by the second tank. The first threshold being higher than the second threshold.

In the above example, the first tank holds 200 L of water and the second tank holds 400 L of water. The first threshold is 6000 µS and the second threshold is 3000 µS.

The water from the 400 L tank is used in the final rinsing of the vehicle and the water from the 200 L tank is used for the other wash cycles.

The first and second tanks are used due to the relative large requirements for water flow of the vehicle washing facility compared to the water flow delivery capabilities of the water works.

In addition to the above mentioned, the vehicle washing facility may monitor the salt contents of the water collected in the rainwater tank using one or more sensors, as the rainwater may also comprise Na+ and/or Cl- ions or other ions.

Although not mentioned specifically, the facility may comprise filters in or at outlets or inlets, or even positioned within pipes connecting the individual elements/tanks.

## Claims

1. A method of establishing water treatment capabilities in an existing vehicle washing facility, said vehicle washing facility comprising:
a vehicle washing hall comprising vehicle washing machinery for automatic or semiautomatic vehicle washing, said vehicle washing machinery including a plurality of water dispensing nozzles,
a first reservoir for storing water, said first reservoir having an outlet in fluid communication with said plurality of water dispensing nozzles for delivering water, said first reservoir having an inlet for receiving water from a waterworks,
a water collection unit collecting waste water from said vehicle washing facility, said water collection unit having an outlet,
a grit chamber having an inlet in fluid communication with said outlet of said water collection unit, said grit chamber having an outlet, and
a second reservoir having an inlet in fluid communication with said outlet of said grit chamber, said second reservoir having an outlet in fluid communication with a sewerage system, said second reservoir defining first height, first width and first length,
said method comprising the steps of:
providing a unit having a structure enabling or enhancing growth of bacteria consuming nutrients from said waste water, said unit defines second height, second width and second length being smaller than said first height, said first width and said first length respectively,
positioning said unit in said second reservoir, and
establishing fluid communication between said second reservoir and said first reservoir for delivering at least partly purified water.

2. The method according to claim 1, wherein said second reservoir defines at least one outlet being in fluid communication with said first reservoir for delivering at least partly purified water thereto.

3. The method according to claim 1 or 2, wherein said second reservoir further defines least one outlet being in fluid communication with a public sewerage system for delivering water thereto.

4. The method according to any of the claims 1-3, wherein said first reservoir is defined by two separate reservoirs each defining a specific volume or, in the alternative, comprises two chambers each defining a specific volume.

5. A unit having a structure enabling or enhancing growth of bacteria for consuming nutrients from said waste water for establishing water treatment capabilities in an existing vehicle washing facility according to the method of claim 1, said unit defining a corrugated surface.

6. A water treatment system for treating waste water from a vehicle washing facility comprising:
a first reservoir for storing and dispensing water, said first reservoir having an inlet for receiving water and an outlet for dispensing water, said outlet of said first reservoir being in fluid communication with said vehicle washing facility, said inlet of said first reservoir in fluid communication with a water works or water company for receiving water therefrom,
a grit chamber having an inlet in fluid communication with said vehicle washing facility for receiving waste water therefrom, said grit chamber having an outlet,
a bio-reactor having an inlet in fluid communication with said outlet of said grit chamber for receiving water therefrom, said bio-reactor including a frame structure supporting a unit whereon bacteria grows for consuming nutrients of said waste water, said bio-reactor having an outlet in fluid communication with a public sewerage system for delivering unused water thereto.

7. The water treatment system according to claim 6, wherein said bio-reactor further includes an outlet in fluid communication with said inlet of said first reservoir.

8. The water treatment system according to claim 6 or 7, further comprising:
a second intermediate reservoir receiving water from said bio-reactor, said second intermediate reservoir including a second pump for pumping water into said first reservoir.

9. The water treatment system according to any of the claims 6-8, said system further comprising:
a intermediate reservoir defining an inlet in fluid communication with said grit chamber and a first outlet in fluid communication with said inlet of said bio-reactor and a second outlet in fluid communication with an undercarriage washing unit in said vehicle washing facility, a pump located downstream from said intermediate reservoir and upstream of said undercarriage washing unit, said pump pumping water from said first intermediate reservoir to said undercarriage washing unit.

10. The water treatment system according to any of the claims 6-9, wherein said system further comprises a rain water reservoir receiving water from a rain collecting unit,
said rain water reservoir having an outlet in fluid communication with said first reservoir for delivering water to said first reservoir.

11. A method of regulating use of an amount of recycled water in a vehicle washing facility, said facility comprising:
an automatic or semi-automatic vehicle washing apparatus having a first outlet and a first inlet,
a first reservoir comprising a water treatment unit, said first reservoir having a second inlet in fluid communication with said first outlet of said automatic or semi-automatic vehicle washing apparatus, said first reservoir having a third outlet in fluid communication with a public sewerage system,
a second reservoir for collecting and storing water having a third inlet in fluid communication with said second outlet of said first reservoir, said second reservoir further having a fourth inlet in fluid communication with a water works, said second reservoir having a fourth outlet in fluid communication with said first inlet of said vehicle washing apparatus,
a pump having a pump inlet and a pump outlet, said pump inlet in fluid communication with said second outlet of said first reservoir, said pump outlet in fluid communication with said fourth inlet of said second reservoir,
a first measuring unit for measuring or determining the conductivity of water present in or delivered from said first reservoir enabling calculation of amount of NaCI in said water,
said method comprising the steps of:
i) measuring or determining the conductivity of said water in said collecting reservoir using said first measuring unit,
ii) provided said conductivity of said water in said first reservoir is below a first conductivity level operating said pump for pumping water from said collecting and storing reservoir into said vehicle washing apparatus.

12. The method according to claim 11, wherein said vehicle washing facility further comprises a rainwater collection unit for collecting and storing rainwater, said rainwater collection unit being in fluid communication with said first inlet of said vehicle washing apparatus,
a second measuring unit for measuring or determining the conductivity of water present in or delivered from said rainwater collection unit enabling calculation of amount of NaCl in said water,
said method further comprising the steps of:
i) measuring or determining the conductivity of said water in said rainwater collection unit using said second measuring unit,
ii) provided said conductivity of said water in said rainwater collection unit is below a third conductivity level operating said pump for pumping water from said rainwater collection unit into said vehicle washing apparatus.

13. The method according to claim 11 or 12 further comprising any of the features of any of claims 1-10.
